# FASCICULE DE BREVET EUROPEEN

(11) **EP 0 955 854 B1**
(45) Date de publication et mention de la délivrance du brevet: **30.10.2002**
(21) Numéro de dépôt: 98902071.4
(22) Date de dépôt: 14.01.1998
(51) Int. Cl.: A47J 27/20

(54) **UNITE DE TRAITEMENT THERMIQUE DE PRODUITS ALIMENTAIRES**
THERMISCHE BEARBEITUNGSEINHEIT FÜR NAHRUNGSMITTEL
THERMAL TREATMENT UNIT FOR FOOD PRODUCTS

(30) Priorité: 17.01.1997 FR 9700647
(43) Date de publication de la demande: 17.11.1999
(73) Titulaire: KAUFLER S.A., F-22600 Loudeac (FR)
(72) Inventeur: CHAMPALAUNE, Jean-Claude, F-35290 Saint-Méen-le-Grand (FR); CORVELER, Yvon, F-56300 Pontivy (FR)
(74) Mandataire: Le Faou, Daniel
(86) Numéro de dépôt international: FR9800056
(87) Numéro de publication internationale: WO98031265

(56) Documents cités:
- EP-A- 0 057 478
- WO-A-94/13184
- DE-A- 3 315 311
- DE-C- 466 168
- FR-A- 2 672 270
- US-A- 3 796 144

## Description

La présente invention se rapporte à une unité de traitement thermique de produits alimentaires, particulièrement adaptée à des produits de charcuterie et salaisons tels que des jambons, viandes cuites, séchées, fumées, par exemple.

Elle concerne également une installation composée de plusieurs unités de moulage de ce type.

On a déjà proposé des unités de moulage de produits alimentaires, en particulier pour la cuisson de jambons.

De manière typique, une unité de ce genre comprend un ensemble de moules en forme de goulottes disposées horizontalement, côte-à-côte et parallèlement les unes aux autres, leur fond étant dirigé vers le bas et leur ouverture vers le haut. Cet ensemble de moules est fixé à des moyens de support qui autorisent l'empilage de plusieurs unités les unes sur les autres.

Le document FR-A-2 672 270, au nom de la demanderesse, se rapporte à une unité de ce genre.

Dans certaines formes de réalisation, chaque goulotte est solidaire d'une plaque formant double fond, qui s'étend sous son fond. Les plaques double-fonds jouent le rôle d'éléments de couvercle aptes à venir s'engager dans les ouvertures de goulotte d'une unité sous-jacente dans un empilage.

L'utilisation de couvercles est utile notamment pour la cuisson de jambons, car la viande se trouve ainsi confinée à l'intérieur d'un volume bien défini dans lequel elle est maintenue sous une certaine pression qui va éliminer les manques de matière et déterminer sa forme définitive.

Pour procéder au traitement thermique des produits alimentaires, en l'occurrence à la cuisson des jambons, on utilise principalement jusqu'ici deux techniques.

La première fait usage de chambres, cellules ou tunnels de cuisson. Il s'agit d'enceintes de dimensions adaptées pour recevoir au moins un "chariot", ce terme désignant, dans le domaine d'activité concerné, un ensemble de plusieurs unités de moulage empilées et déplaçables sur une voie de roulement. Généralement, l'enceinte est dimensionnée pour contenir de deux à douze chariots.

Pour procéder à la cuisson de jambons, on utilise généralement de la vapeur d'eau, qui est diffusée dans l'enceinte.

Une telle installation, qui suppose une bonne étanchéité et une bonne isolation thermique de l'enceinte, et met en oeuvre des ventilateurs pour le brassage de la vapeur servant à la cuisson, est coûteuse.

De plus, sa jonction se limite à la cuisson des produits, mais n'en assure pas le refroidissement.

Enfin, il se pose un problème lié au contact entre le fluide caloporteur - en l'occurrence la vapeur d'eau - et les produits à traiter, ce qui constitue un risque de contamination microbienne des produits.

La seconde technique utilise des cuves ou marmites de cuisson de forme généralement parallélépipèdique et munies d'un couvercle. La cuisson se fait par de l'eau chaude. Celle-ci est chauffée soit à l'aide d'un dispositif annexe tel qu'une chaudière, soit dans la cuve elle-même, par échange thermique ou par injection de vapeur.

De telles cuves sont d'un usage peu commode car il est nécessaire d'y charger les unités de cuisson par le haut, par exemple en utilisant un palan ou un pont roulant.

De plus, le problème de contamination est encore plus critique avec ce procédé.

Dans sa demande de brevet français N° 96 03556 du 18 mars 1996, non encore publiée au moment du dépôt de la présente demande de brevet, la demanderesse a proposé une solution pour remédier aux inconvénients précités.

Pour cela, un premier objectif de l'invention qui fait l'objet de cette demande antérieure était de fournir une unité de moulage de produits alimentaires qui soit pourvue elle-même de moyens aptes à réaliser le traitement thermique des produits. Ce faisant, on diminue sensiblement le prix de revient de l'opération.

Un deuxième objectif était de pouvoir réaliser ce traitement sans qu'il y ait contact entre le fluide caloporteur et les produits alimentaires, de manière à éliminer pratiquement tout risque de contamination.

Ladite invention visait également à atteindre ces objectifs à l'aide de moyens simples, peu coûteux et faciles à utiliser.

Pour ce faire, la demanderesse a mis à profit l'espace "mort", c'est-à-dire non utilisé, qui est situé, dans les unités connues, entre le fond d'une goulotte et l'élément de couvercle (double-fond) disposé sous ce fond.

L'unité de moulage et de traitement thermique qui fait l'objet de la demande de brevet N° 96 03556 comprend, de manière connue, un ensemble de moules en forme de goulottes disposées horizontalement, côte-à-côte et parallèlement les unes aux autres, leur fond étant dirigé vers le bas et leur ouverture vers le haut, et à chaque goulotte est associé un élément de couvercle qui s'étend en-dessous de son fond, cet ensemble de moules étant fixé à des moyens de support qui autorisent l'empilage des unités, les éléments de couvercle venant alors s'engager dans les ouvertures de goulotte d'une unité sous-jacente.

De plus, aussi bien les goulottes que les éléments de couvercle sont réalisés dans un matériau thermiquement bon conducteur.

La caractéristique nouvelle et remarquable de l'unité revendiquée dans cette demande de brevet antérieure consiste dans le lait que chaque goulotte est fixée à l'élément de couvercle associé de manière à délimiter un conduit étanche - dit élémentaire - apte à recevoir un fluide caloporteur pour le traitement, par échange thermique, des produits alimentaires contenus dans lesdites goulottes.

Il est ainsi ménagé autour de chaque goulotte un espace étanche où on fait circuler un fluide caloporteur tel que de l'eau, de l'huile ou de la vapeur, par exemple.

Ainsi le traitement thermique, par exemple la cuisson des produits, se fait de manière efficace et homogène car une grande partie, voire la totalité des produits est entourée par le fluide caloporteur.

Dans un mode de réalisation préféré, chacun de ces conduits élémentaires s'étend non seulement sous la goulotte associée, mais aussi le long de ses flancs latéraux, de sorte que c'est l'intégralité de la paroi de la goulotte (toute la périphérie de la section) qui est exposée à l'échange thermique avec le fluide caloporteur.

Chaque conduit élémentaire entoure ainsi complètement - ou à peu près complètement - la paroi de la goulotte correspondante.

Comme, par ailleurs, le couvercle de l'unité supérieure, qui constitue une portion de la paroi du conduit de cette unité, s'engage dans l'ouverture de la goulotte, c'est l'ensemble du produit contenu dans celle-ci qui est cerné par le fluide caloporteur.

Une variante de cette unité, qui est plus particulièrement adaptée au traitement de produits allongés dont la section a une forme courbe, symétrique par rapport à un plan longitudinal médian, notamment des produits de section circulaire et ovale, fait l'objet de la demande de brevet français N° 96 12857 du 17 octobre 1996, également au nom de la demanderesse.

Cette demande de brevet n'était pas publiée, non plus, à la date de dépôt de la présente demande.

Le principal inconvénient des dispositifs sus-mentionnés est qu'ils ne sont adaptés qu'à des produits de formes et de dimensions bien définies, correspondant à celles du canal obtenu par la superposition d'un couvercle et de la goulotte associée, ou de deux demi-goulottes, lorsque les unités sont empilées.

Ceci limite le champ d'application de ce type de matériel. On notera en particulier s'agissant de la cuisson de jambons, qu'on ne peut pas en faire usage pour traiter des produits contenus dans des moules individuels traditionnels de forme complexe.

C'est pourquoi un objectif de la présente invention est de proposer une unité de traitement polyvalente, susceptible de recevoir des produits alimentaires de formes et dimensions variées, et contenus ou non dans des moules, cette unité présentant sensiblement les mêmes avantages que ceux des unités faisant les objets des demandes antérieures N° 96 03556 et N° 96 12857 précitées.

On connaît par ailleurs, par le document DE-A-3 315 311, une presse pour des produits de charcuterie, adaptée pour mettre en forme et faire mûrir par traitement thermique des saucissons crus (en allemand "Rohwürste"). Les produits sont intercalés entre des plateaux superposés qui sont guidés dans un bâti et sont pressés les uns contre les autres par des vérins. Dans ces plateaux sont noyés des conduits en forme de serpentin, parcourus par un fluide caloporteur, par exemple de l'eau chaude.

L'espace intérieur de chaque plateau, à l'extérieur du serpentin, est occupé par un matériau réfractaire qui est censé emmagasiner la chaleur de manière à ce que celle-ci soit diffusée de manière homogène contre les produits ; en combinaison avec des cloisons internes (entretoises) ce matériau a aussi pour rôle de rigidifier le plateau.

Ce dispositif connu présente l'inconvénient majeur que les produits traités sont soumis à un écrasement non homogène, et mal contrôlé. En effet, la pression subie par les produits de la couche inférieure est nettement plus grande que celle subie par la couche supérieure, puisqu'elle est soumise - en plus de la poussée des vérins - au poids de la pile sus-jacente.

De plus, l'apport d'énergie thermique (calories ou frigories) aux produits, via le serpentin, est forcément très limité. Cet apport est probablement suffisant lorsqu'il s'agit de faire mûrir des produits crus à une température modérée - en l'occurrence 16°C à coeur -. Il ne l'est pas pour des traitements à haute température, par exemple pour cuire des jambons lorsqu'une température à coeur de l'ordre de 65 à 70°C est requise, ou à très basse température, pour congeler des produits.

Enfin, les plateaux ne peuvent pas être dépilés, et défaits de leur assemblage, en vue de les amener un à un dans une position ergonomique pour un chargement ou un déchargement pratiques.

Un objectif de l'invention est de supprimer ces inconvénients.

A cet effet, l'unité de traitement thermique de produits alimentaires qui fait l'objet de l'invention, et qui comprend une plaque de fond horizontale (dans sa position normale d'utilisation), destinée à supporter les produits à traiter, est remarquable par le fait que ladite plaque de fond consiste en un caisson plat étanche, dont la paroi supérieure au moins - et de préférence les deux parois - est (sont) thermiquement conductrice(s), à l'intérieur duquel il est possible de faire circuler un fluide caloporteur, cette plaque de fond étant solidaire d'éléments d'appui qui permettent d'empiler plusieurs unités les unes sur les autres tout en maintenant leurs plaques de fond mutuellement écartées, d'un espacement déterminé.

Grâce à cette disposition, le fluide caloporteur a la forme d'une lame qui est en contact thermique avec la totalité de la paroi du caisson, ce qui permet d'obtenir un transfert thermique extrêmement efficace du fluide caloporteur au produit placé sur la paroi supérieure, ce transfert pouvant se faire à des températures très variées, pouvant être extrêmement basses ou au contraire trèa élevées.

Par ailleurs, du fait que des éléments d'appui sont prévus, qui permettent de calibrer l'espacement entre les plaques de fond, le degré d'écrasement des produits, si écrasement il y a, est parfaitement contrôlé, et ne dépend pas de l'emplacement de l'unité en question au sein de la pile, le poids d'une unité étant absorbé par l'unité sous-jacente, mais non par les produits qui la garnissent, contrairement à ce qui se passe avec la presse du DE-A-3 315 311 cité plus haut.

Dans un mode de réalisation préféré de cette unité, la paroi supérieure du caisson est nervurée.

Cette mesure a pour intérêt de renforcer mécaniquement la plaque de fond, et en particulier sa paroi supérieure, sur laquelle vont reposer les produits à traiter.

Avantageusement, ce nervurage est constitué de plusieurs nervures parallèles formées dans la paroi supérieure du caisson, et dont la section a la forme d'un "V" renversé.

Par ailleurs, selon un certain nombre de caractéristiques additionnelles, non limitatives de l'invention :
- l'espace intérieur du caisson constitutif de la plaque de fond est compartimenté de manière à conférer au fluide caloporteur une trajectoire en chicane ;
- cet espace est compartimenté par des lignes de séparation situées en regard des nervures ;
- l'unité présente deux flancs latéraux opposés qui ont une double paroi, également (bonne) conductrice thermique, et qui constituent des caissons plats verticaux communicant avec le caisson constitutif de la plaque de fond ;
- lesdits caissons verticaux sont munis d'embouts (manchons) de connexion qui permettent de raccorder l'unité respectivement à des conduits d'amenée et d'évacuation du fluide caloporteur ;
- lesdits éléments d'appui consistent en une paire de flasques verticaux fixés aux deux bords opposés de la plaque de fond, et qui obturent les extrémités du caisson constitutif de cette dernière ainsi que, le cas échéant, les extrémités desdits caissons verticaux ;
- l'unité consiste en un bac étanche apte à recevoir un liquide dans lequel on peut baigner les produits à traiter ;
- l'unité comporte un système de déversement, tel qu'un tube traversant la plaque de fond et assurant l'évacuation du trop plein de liquide lorsque celui-ci atteint un niveau prédéterminé.

L'installation pour le traitement thermique de produits alimentaires, et notamment de produits de charcuterie, qui fait également partie de la présente invention, est remarquable en ce qu'elle comporte plusieurs unités telles que décrites ci-dessus, qui sont empilées les unes sur les autres, et qu'elle est équipée de conduits d'amenée et d'évacuation du fluide caloporteur, auxquels chacune des unités de la pile est connectée.

Dans un mode de réalisation possible, l'installation est composée d'unité qui consistent en un bac étanche apte à recevoir un liquide dans lequel on peut baigner les produits à traiter, éventuellement muni d'un système de déversement tel que mentionné plus haut, l'installation comportant en outre un système de vidage à clapets de décharge apte à assurer le vidage de l'ensemble des bacs.

Dans un mode de réalisation possible, le fluide caloporteur consiste en un liquide chaud permettant de cuire lesdits produits alimentaires.

Dans un autre mode de réalisation possible, ce fluide consiste en un liquide froid permettant de refroidir ou de congeler lesdits produits alimentaires.

D'autres caractéristiques et avantages de l'invention apparaîtront de la description et des dessins annexés, qui en représentent, à simple titre d'exemples non limitatifs, des modes de réalisation préférés.

Sur ces dessins :
- la figure 1 est une vue en perspective d'une unité de traitement thermique pour produits alimentaires, conforme à l'invention ;
- les figures 2 et 3 sont des vues en coupe, respectivement transversale et longitudinale, selon les plans de coupe II et respectivement III de la figure 1, de cette même unité ;
- les figures 4 et 5 sont des vues en coupe transversale, à grande échelle, de détails de la plaque de fond de l'unité de la figure 1, au niveau d'une nervure, respectivement dans la zone centrale et dans une zone d'extrémité de la plaque de fond ;
- la figure 6 est une vue de dessus schématique de la plaque de fond en forme de caisson plat, dont la paroi supérieure est supposée enlevée, cette vue étant destinée à illustrer la trajectoire du fluide caloporteur à l'intérieur de la plaque de fond ;
- les figures 7 et 8 sont des vues, respectivement de face et de côté, d'une partie d'un empilement d'unités conformes à celle des figures 1 à 3 ;
- les figures 9 et 10 sont des sections transversales d'un produit alimentaire de forme allongée dont le traitement est obtenu à l'aide d'une installation de traitement thermique conforme à celle illustrée aux figures 7 et 8, cette installation réalisant également le moulage (mise en forme) du produit, ces figures 9 et 10 représentant respectivement le produit avant et après sa mise en forme ;
- la figure 11 est une vue similaire à celle de la figure 2, à plus grande échelle, d'une unité dans laquelle sont traités des produits similaires à celui des figures 9 et 10 ;
- la figure 12 est une vue schématique en coupe transversale, similaire à celle de la figure 11, qui représente une variante de l'unité de traitement, adaptée pour un traitement de cuisson au bain marie de produits alimentaires contenus dans un moule individuel ;
- la figure 13 représente schématiquement une installation de traitement composée d'un empilement d'unités telles que celle représentée à la figure 12.

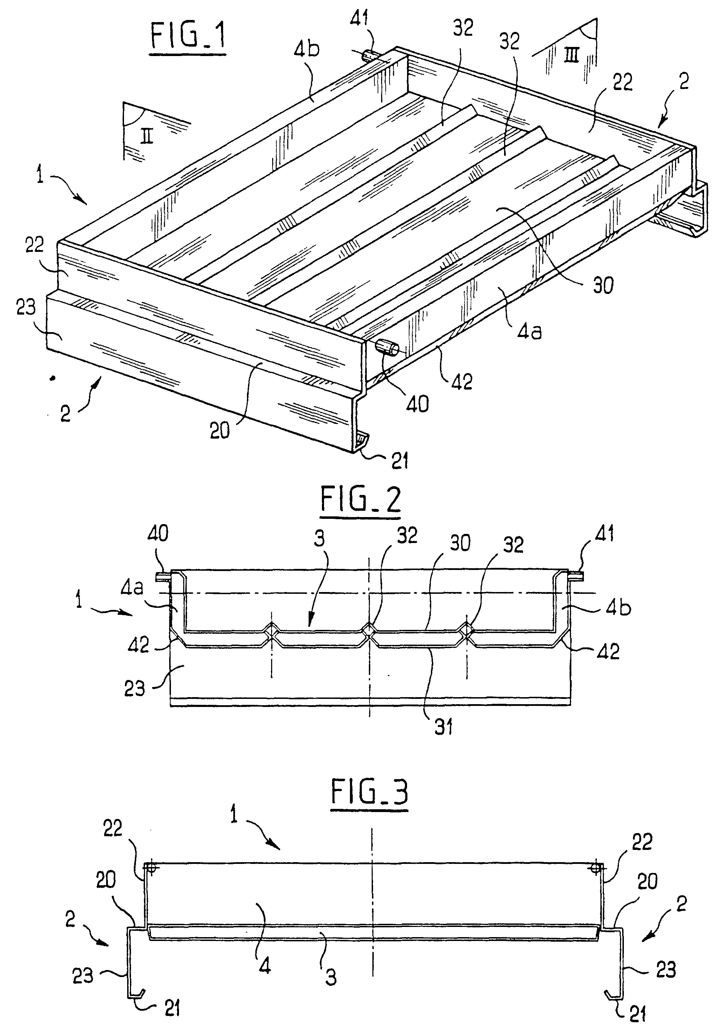

L'unité de traitement thermique pour des produits alimentaires, par exemple pour la cuisson de produits de charcuterie, qui est illustrée sur les figures 1 à 3, porte la référence 1.

Cette unité, fabriquée en tôle d'acier inoxydable, thermiquement bon conducteur, comprend une plaque de fond 3, de forme générale rectangulaire, dont les petits côtés sont fixés à des éléments d'appui 2.

Quand l'unité repose au sol (ou tout autre support), ou sur une autre unité de traitement similaire, la plaque 3 est sensiblement horizontale.

La plaque de fond 3 consiste en un caisson plat étanche, dont les parois supérieure et inférieure sont référencées 30 et 31.

Les éléments d'appui 2 sont des flasques similaires à ceux des unités décrites dans le FR-A-2 672 270 et dans la demande antérieure 96 03556 précitée.

Chaque flasque 2 est une plaque en tôle à pliage multiple, dont la partie inférieure 23 s'étend vers le bas, bien en-dessous du niveau du fond 3, et est décalée vers l'extérieur.

La partie supérieure 22 des flasques est soudée à la plaque de fond 3, dont elle obture les extrémités.

L'extrémité basse des flasques (voir figure 3) est repliée vers l'intérieur pour former des faces d'appui horizontales 21 destinées à venir en appui sur des faces intermédiaires horizontales 20, lesquelles correspondent au décrochement vers l'extérieur de la zone médiane des flasques.

Ainsi, on peut poser l'unité sur le sol, ou tout autre support - tel que des rouleaux, par exemple-.

On peut également les empiler les unes sur les autres, les faces d'appui 21 d'une unité venant se positionner et prendre appui sur les faces 20 de l'unité sous-jacente.

Ce type d'agencement est bien connu, notamment par le FR-A-2 672 270, auquel on pourra se reporter au besoin.

Selon une caractéristique intéressante de l'invention, la paroi supérieure de la plaque de fond 3 est nervurée.

Les nervures, désignée 32, sont par exemple au nombre de quatre, régulièrement espacées sur toute la largeur du fond ; elles s'étendent longitudinalement, c'est-à-dire perpendiculairement aux flasques d'extrémité 2.

Le nervurage est obtenu par déformation (pliage/emboutissage) de la paroi 30, les nervures 32 ayant une section en forme de "V" renversé d'angle au sommet égal à 90°.

Ce nervurage améliore la rigidité de la paroi 30.

Dans le mode de réalisation illustré sur les figures 1 à 3, l'unité a la forme d'un bac étanche, la plaque de fond se prolongeant sur ses grands côtés par des caissons verticaux 4a, 4b, qui communiquent avec l'espace intérieur du caisson formant plaque de fond 3.

On observera sur les figures que les bords de la paroi inférieure 31 sont biseautés, présentant des faces obliques 42 par lesquelles s'opère la jonction avec la paroi externe de chacun des caissons 4. Ces faces assurent le centrage mutuel de deux unités superposées lors de leur empilage.

Les faces 22 des éléments d'appui 2 obturent également les extrémités de caissons verticaux 4.

Dans les caissons 4a et 4b sont montés des manchons connecteurs, ou embouts, 40, respectivement 41, pour le branchement de l'unité à des conduits d'amenée et, respectivement, d'évacuation d'un fluide caloporteur (par exemple de l'eau chaude).

Dans le mode de réalisation illustré, les embouts 40 et 41 sont situés en des emplacements diagonalement opposés de l'unité.

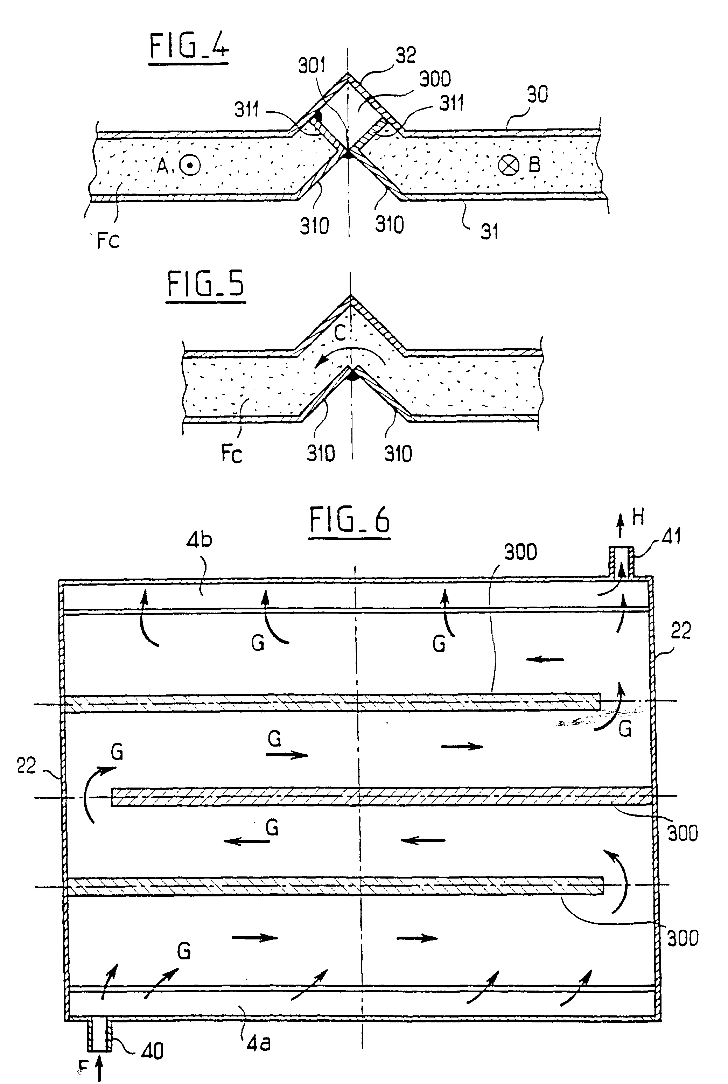

Le caisson 3, qui forme plaque de fond, est compartimenté intérieurement, de telle sorte que le fluide caloporteur va s'écouler suivant une lame, avec une trajectoire en chicane illustrée à la figure 6.

Pour cela, comme cela est visible à la figure 4, la paroi inférieure 31 est composée de plusieurs éléments dont les bords présentent, en vis-à-vis de chaque nervure 32, un double pliage à 45° 310, 311.

La liaison des deux parties est réalisée par une ligne de soudure 301 qui assure la séparation des espaces situés de chaque côté de cette ligne, à l'intérieur du caisson.

Une autre ligne de soudure assure la liaison de l'une des deux parties repliées 311 avec la paroi supérieure 30.

Toutefois, cette ligne de fermeture 301 ne s'étend pas sur toute la longueur de la plaque de fond ; au contraire, elle est interrompue à l'une de ses extrémités, comme illustré à la figure 5, pour autoriser le contournement du fluide caloporteur et lui donner la trajectoire en chicane (ou en serpentin).

Sur les figures 4 et 5, on a désigné par **FC** le fluide caloporteur.

Comme symbolisé par les flèches vues en bout **A** et **B** sur la figure 4, le fluide s'écoule en sens inverse d'un côté à l'autre de la ligne de soudure.

Comme illustré par la flèche **C** sur la figure 5, le fluide **FC** peut s'écouler d'un côté à l'autre à une extrémité de la ligne de fermeture.

Les parties repliées 311 délimitent, avec les faces de la nervure 32, un espace "mort" 300, de section carrée, dans lequel peut pénétrer le fluide **FC**, mais où il n'est normalement pas en mouvement, cet espace étant borgne.

A la figure 6 on a désigné par les flèches **F** et **H** respectivement l'entrée et la sortie du fluide caloporteur dans la plaque de fond, et par les flèches **G** la circulation de ce fluide tout d'abord du caisson vertical 4a dans le caisson horizontal 3, où il va décrire la trajectoire en chicane, puis dans le caisson 4b, d'où il va s'échapper.

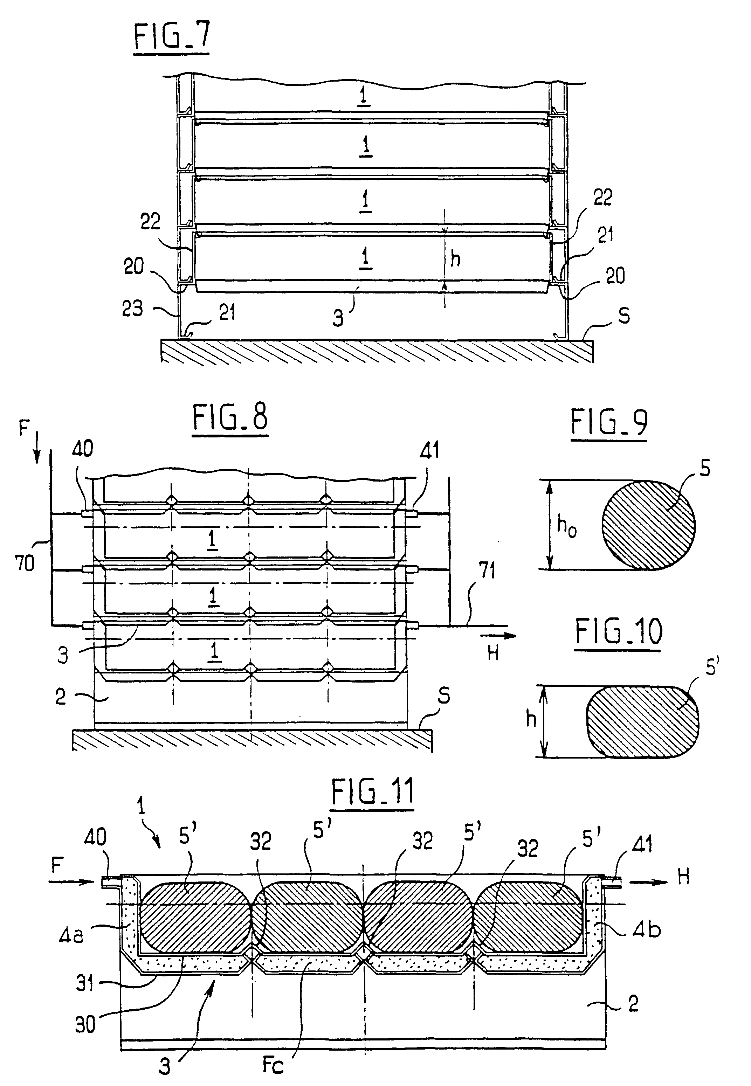

L'installation illustrée sur les figures 7 et 8 est composée d'un empilage d'unités telle que celle qui vient d'être décrite, partiellement représentée.

La pile est placée sur un support **S**, par exemple sur le sol ou tout autre support tel que des rouleaux de transport.

Sur la figure 7 on a désigné par la référence **h** l'écartement mutuel des fonds dans l'empilage.

Cet écartement **h** est parfaitement défini ; il est fonction de la hauteur des parties 23 des éléments d'appui 2.

Comme le montre la figure 8, l'installation comprend une canalisation d'amenée de liquide caloporteur, référencée 70, qui est branchée - de préférence par un montage en parallèle - sur les embouts d'entrée 40 de l'ensemble des unités.

De la même manière, les embouts de sortie 41 sont branchés en parallèle à une canalisation d'évacuation 71.

L'arrivée et l'évacuation du fluide caloporteur sont symbolisés respectivement par les flèches **F** et **H**. Dans l'exemple illustré, on a affaire à des produits de charcuterie déformables, par exemple de viande contenue dans une enveloppe (boyau) relativement malléable, qui doivent subir un traitement de cuisson.

Il s'agit de produits allongés, de forme initiale cylindrique, référencés 5, dont le diamètre - désigné **h**₀ à la figure 9 - est un peu plus grand que l'espacement **h** mentionné plus haut.

La plaque de fond est conformée et dimensionnée pour recevoir côte-à-côte quatre de ces produits.

Chaque produit 5 est placé sur la paroi supérieure 30 de la plaque de fond, longitudinalement, entre un caisson de bordure 4 et une nervure 32 ou entre deux nervures 32.

On commence bien entendu à garnir de produits 5 l'unité inférieure, placée sur le support **S**, après quoi on garnit l'unité suivante que l'on place sur l'unité inférieure, et ainsi de suite, jusqu'à constitution complète de la pile.

Au cours de cet empilement, les produits vont être déformés sous l'effet de la pression de la plaque de fond sus-jacente, et se trouver ovalisés, pour prendre la section illustrée sur les figures 10 et 11, référencée 5'.

C'est dans cet état que va s'opérer la cuisson des produits 5', par circulation du fluide caloporteur, en l'occurrence de l'eau chaude à l'intérieur des unités.

La face aplatie inférieure du produit reçoit des calories de la paroi supérieure de la plaque de fond qui le supporte. Sa face aplatie supérieure reçoit des calories de la paroi inférieure de la plaque de fond de l'unité sus-jacente.

A titre indicatif, la température de l'eau sera de l'ordre de 70°C, et le temps de traitement de l'ordre de 6 à 12 heures (en fonction de la nature et des dimensions des produits auxquels on a affaire).

Comme on le note à l'observation de la figure 11, l'unité est de préférence dimensionnée de telle sorte que dans leur état ovalisé, les produits 5' soient en contact les uns avec les autres, et avec la paroi interne des caissons latéraux 4a et 4b (également bonne conductrice thermique).

Le contact thermique avec les caissons inférieurs, supérieurs et latéraux d'un groupe de produits 5' est donc convenable ; comme de plus les produits sont en contact mutuel, la cuisson peut se faire dans de bonnes conditions, même si le transfert thermique est un peu moins bon qu'avec des unités à goulottes telles que mentionnées dans le préambule de la présente demande.

Une fois terminée la cuisson, l'installation peut être également utilisée pour refroidir les produits cuits, en y faisant circuler un fluide froid, par exemple de l'eau froide.

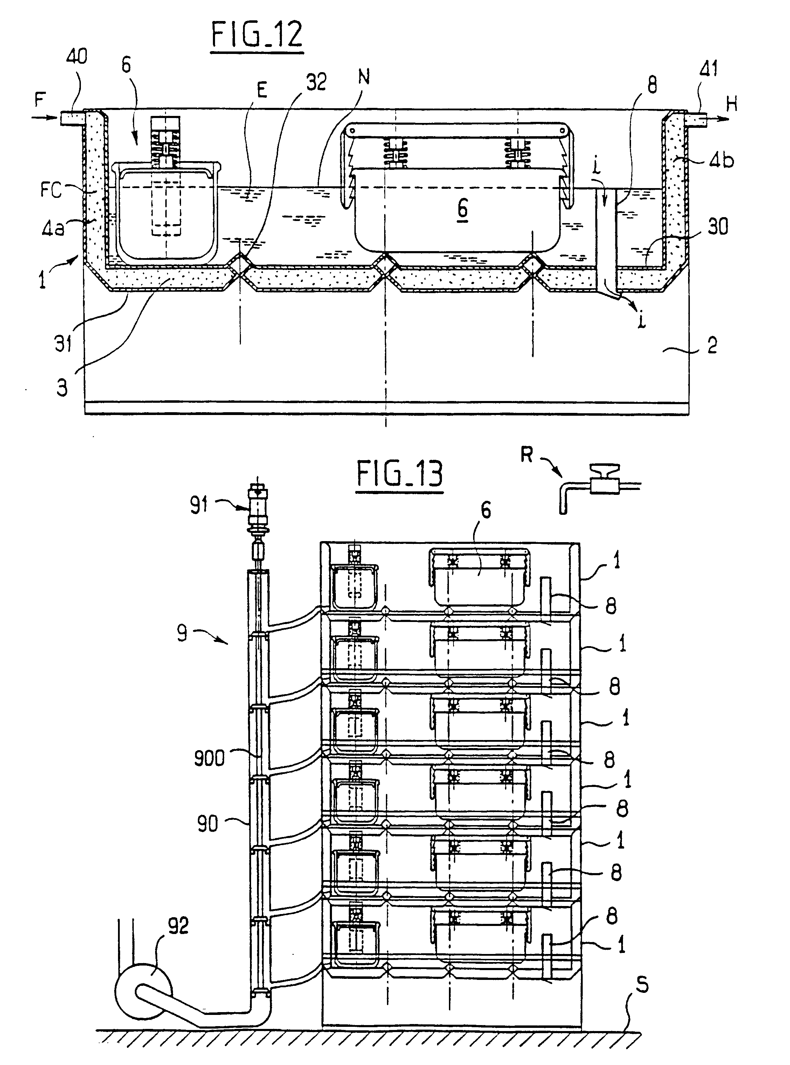

Dans la variante illustrée sur les figures 12 et 13, l'unité est équipée d'un dispositif de déversement de trop plein.

Ce dispositif consiste tout simplement en un tube 8 qui traverse une ouverture de la plaque de fond 3, et y est fixé de manière étanche, par exemple par soudage.

Ce tube se dresse sur une certaine hauteur, de valeur prédéterminée, a l'intérieur de l'unité en forme de bac.

Dans une variante, cette hauteur peut être réglable (tube en deux parties vissables l'une dans l'autre, de longueur variable).

Comme on le comprend aisément à l'observation de la figure 12, si on verse un liquide **E**, par exemple de l'eau, à l'intérieur d'une unité, le trop plein va s'écouler par ce tube 8 et être évacué vers le bas - comme symbolisé par les flèches **i** - Le niveau **N** du liquide est donc constant. Il correspond à la hauteur du tube 8 à l'intérieur du bac.

Si on considère un empilement tel que celui illustré à la figure 13, on comprend donc qu'en faisant couler l'eau, à l'aide d'un robinet **R**, dans l'unité supérieure de la pile, le trop plein se déverse dans l'unité sous-jacente, et ainsi de suite du haut vers le bas. Chaque unité reçoit le même volume d'eau.

Quand le niveau requis a été atteint dans l'unité inférieure, on arrête l'alimentation en eau. Bien entendu cet arrêt pourrait être commandé de manière automatique, par une temporisation de l'alimentation d'eau réglée de telle façon que le bac inférieur reçoive au moins la quantité suffisante.

Une telle installation peut notamment servir à recevoir plusieurs moules a jambon individuel. Dans l'exemple illustré il s'agit de moules 6 de type traditionnel couramment utilisés dans les charcuteries industrielles, dont la fermeture du couvercle est assurée par des crémaillères. Ce couvercle est sollicité par des ressorts, de manière à exercer une pression sur le jambon.

Les éléments d'appui 2 ont une hauteur suffisante, pour empêcher que la plaque de fond de l'unité ne vienne en contact avec les moules 6 de l'unité sous-jacente.

Le niveau d'eau est choisi pour que pratiquement toute la hauteur de paroi des moules baigne dans l'eau, voire que les moules soient totalement immergés.

Pour la cuisson des jambons, on fait circuler de l'eau chaude dans l'ensemble des unités, de la même manière que cela a été décrit plus haut en référence à la figure 8.

La cuisson ici s'effectue en bain marie, le liquide caloporteur transférant sa chaleur à l'eau **E** qui entoure les moules 6.

Avantageusement, comme illustré, certains moules sont placés sur des nervures 32, ce qui ménage sous le fond du moule un espace dans lequel peut circuler l'eau du bain marie, favorisant ainsi l'échange thermique et l'homogénéité de la cuisson.

Après cuisson, et éventuellement refroidissement, on évacue le liquide **E**.

Dans l'exemple illustré à la figure 13, on branche pour cela l'ensemble des bacs sur un système de vidage 9 à clapets multiples. A chaque unité est associé un clapet, l'ensemble étant porté par une tige 900 pouvant coulisser dans un tube vertical 90, et dont le déplacement est commandé par un vérin 91.

Une pompe de reprise 92 assure le rejet du liquide **E**, ou son recyclage en vue d'une opération suivante.

On comprend que grâce à l'invention, il est possible de traiter des produits de formes et de dimensions variées, contenus ou non dans des moules individuels ou dans d'autres récipients (par exemple dans des bocaux).

Elle s'applique aussi à des produits non confinés dans une enveloppe ni contenus dans des récipients, par exemple des poitrines ou des pieds de porcs.

Comme déjà dit, le traitement peut être un traitement impliquant un apport de calories - notamment pour la cuisson des produits - ou, au contraire, un traitement avec apport de frigories, notamment pour le refroidissement ou la congélation des produits.

## Revendications

1. Unité de traitement thermique de produits alimentaires, qui comprend une plaque de fond horizontale destinée à supporter les produits à traiter (5, 6), **caractérisée par le fait que** ladite plaque de fond (3) consiste en un caisson plat étanche, dont la paroi supérieure (30) au moins - et de préférence les deux parois (30, 31) - est (sont) thermiquement conductrice(s), à l'intérieur duquel il est possible de faire circuler un fluide caloporteur (FC), cette plaque de fond (3) étant solidaire d'éléments d'appui (2) qui permettent d'empiler plusieurs unités (1) les unes sur les autres tout en maintenant leurs plaques de fond (3) écartées d'un espacement déterminé.

2. Unité selon la revendication 1, **caractérisée par le fait que** ladite paroi supérieure (30) est nervurée.

3. Unité selon la revendication 2, **caractérisée par le fait que** ladite paroi supérieure présente plusieurs nervures parallèles (32), dont la section a la forme d'un "V" renversé.

4. Unité selon l'une des revendications 1 à 3, **caractérisée par le fait que** l'espace intérieur du caisson constitutif de la plaque de fond (3) est compartimenté de manière à conférer au fluide caloporteur (FC) une trajectoire en chicane.

5. Unité selon les revendications 3 et 4 prises en combinaison, **caractérisée par le fait que** l'espace est compartimenté par des lignes de séparation (301) situées en regard des nervures (32).

6. Unité selon l'une des revendications 1 à 5, **caractérisée par le fait qu'**elle présente deux flancs latéraux opposés qui ont une double paroi, également conductrice thermique, et qui constituent des caissons plats verticaux (4a, 4b) communicant avec le caisson constitutif de la plaque de fond (3).

7. Unité selon la revendication 6, **caractérisée par le fait que** lesdits caissons verticaux (4a, 4b) sont munis d'embouts de connexion (40, 41) qui permettent de raccorder l'unité (1) respectivement à des conduits d'amenée et d'évacuation du fluide caloporteur (FC).

8. Unité selon l'une des revendications 1 à 7, **caractérisée par le fait que** lesdits éléments d'appui (2) consistent en une paire de flasques verticaux fixés aux deux bords opposés de la plaque de fond (3), et qui obturent les extrémités du caisson constitutif de cette dernière ainsi que, le cas échéant, les extrémités desdits caissons verticaux (4a, 4b).

9. Unité selon l'une des revendications 1 à 8, **caractérisée par le fait qu'**elle consiste en un bac étanche apte à recevoir un liquide (E) dans lequel on peut baigner les produits à traiter (6).

10. Unité selon la revendication 9, **caractérisée par le fait qu'**elle comporte un système de déversement, tel qu'un tube (8) traversant la plaque de fond (3) et assurant l'évacuation du trop plein de liquide (E) lorsque celui-ci atteint un niveau (N) prédéterminé.

11. Installation pour le traitement thermique de produits alimentaires, et notamment de produits de charcuterie, **caractérisée par le fait qu'**elle comporte plusieurs unités (1) conformes à l'une des revendications précédentes, qui sont empilées les unes sur les autres, et qu'elle est équipée de conduits d'amenée (70) et d'évacuation (71) du fluide caloporteur, auxquels chacune des unités de la pile est connectée.

12. Installation selon la revendication 11, **caractérisée par le fait qu'**elle est composée d'unités conformes à la revendication 9 ou 10, et qu'elle comporte un système de vidage à clapets (9) apte à assurer le vidage de l'ensemble des bacs.

13. Installation selon la revendication 11 ou 12, **caractérisée par le fait que** le fluide caloporleur (FC) consiste en un liquide chaud permettant de cuire lesdits produits alimentaires.

14. Installation selon la revendication 11 ou 12, **caractérisée par le fait que** le fluide caloporteur (FC) consiste en un liquide froid permettant de refroidir ou de congeler lesdits produits alimentaires.

## Claims

1. Unit for heat treatment of food products, which comprises a horizontal base plate intended to support the products (5, 6) to be treated, **characterized in that** the said base plate (3) consists of a sealed flat chamber, at least the upper wall (30) - and preferably both walls (30, 31) - of which is (are) thermally conducting, inside which it is possible to make a heat-transfer fluid (FC) flow, this base plate (3) being secured by support elements (2) which allow several units (1) to be stacked one on top of another while keeping their base plates (3) separated by a predetermined distance.

2. Unit according to Claim 1, **characterized in that** the said upper wall (30) is ribbed.

3. Unit according to Claim 2, **characterized in that** the said upper wall has several parallel ribs (32), the cross section of which has the shape of an inverted "V".

4. Unit according to one of Claims 1 to 3, **characterized in that** the inner space of the chamber constituting the base plate (3) is compartmentalized so as to give the heat-transfer fluid (FC) a baffle-type path.

5. Unit according to Claims 3 and 4 taken together, **characterized in that** the space is compartmentalized by separating lines (301) located facing the ribs (32).

6. Unit according to one of Claims 1 to 5, **characterized in that** it has two opposed side walls which have a double wall, also thermally conducting, and which constitute vertical flat chambers (4a, 4b) communicating with the chamber constituting the base plate (3).

7. Unit according to Claim 6, **characterized in that** the said vertical chambers (4a, 4b) are fitted with connecting end pieces (40, 41) which make it possible to connect the unit (1) to ducts for respectively supplying and discharging the heat-transfer fluid (FC).

8. Unit according to one of Claims 1 to 7, **characterized in that** the said support elements (2) consist of a pair of vertical flanges fastened to the two opposing edges of the base plate (3), and which close off the ends of the chamber constituting the latter and, where appropriate, the ends of the said vertical chambers (4a, 4b).

9. Unit according to one of Claims 1 to 8, **characterized in that** it consists of a sealed tray capable of receiving a liquid (E) in which it is possible to immerse the products to be treated (6).

10. Unit according to Claim 9, **characterized in that** it comprises a drainage system, such as a tube (8) passing through the base plate (3) and allowing the overflow of liquid (E) to be discharged when the latter reaches a predetermined level (N).

11. Plant for the heat treatment of food products, and especially of cold meat products, **characterized in that** it comprises several units (1) according to one of the preceding claims, which are stacked on top of each other, and **in that** it is equipped with pipes for supplying (70) and discharging (71) the heat-transfer fluid, to which each of the units of the stack is connected.

12. Plant according to Claim 11, **characterized in that** it consists of units according to Claim 9 or 10, and **in that** it comprises an emptying system with valves (9) capable of emptying all of the trays.

13. Plant according to Claim 11 or 12, **characterized in that** the heat-transfer fluid (FC) consists of a hot liquid allowing the said food products to be cooked.

14. Plant according to Claim 11 or 12, **characterized in that** the heat-transfer fluid (FC) consists of a cold liquid allowing the said food products to be chilled or frozen.

## Patentansprüche

1. Wärmebehandlungseinheit für Nahrungsmittel, die eine horizontale Bodenplatte aufweist, die dafür bestimmt ist, die zu behandelnden Produkte (5, 6) zu tragen, **dadurch gekennzeichnet, dass** die Bodenplatte (3) aus einem dichten, flachen Behälter besteht, dessen obere Wand (30) zumindest - und vorzugsweise die beiden Wände (30, 31) - wärmeleitend ist (sind), und in dessen Innenraum es möglich ist, ein Wärmeübertragungsfluid (FC) zirkulieren zu lassen, wobei diese Bodenplatte (3) mit Auflageelementen (2) einstückig ausgebildet ist, die ermöglichen, mehrere Einheiten (1) aufeinander aufzustapeln, wobei ihre mit einem bestimmten Zwischenraum voneinander beabstandet angeordneten Bodenplatten (3) vollständig beibehalten werden.

2. Einheit gemäß Anspruch 1, **dadurch gekennzeichnet, dass** die obere Wand (30) mit Rippen versehen ist.

3. Einheit gemäß Anspruch 2, **dadurch gekennzeichnet, dass** die obere Wand mehrere parallele Rippen (32) aufweist, deren Querschnitt die Form eines umgedrehten "V" aufweist.

4. Einheit gemäß einem der Ansprüche 1 bis 3, **dadurch gekennzeichnet, dass** der Innenraum des die Bodenplatte (3) bildenden Behälters derart in Fächer eingeteilt ist, dass das Wärmeübertragungsfluid (FC) einer wellenförmigen Bahn folgt.

5. Einheit gemäß den Ansprüchen 3 und 4 in Kombination, **dadurch gekennzeichnet, dass** der Raum durch Trennlinien (301), die gegenüber den Rippen (32) angeordnet sind, in Fächer unterteilt ist.

6. Einheit gemäß einem der Ansprüche 1 bis 5, **dadurch gekennzeichnet, dass** sie zwei einander gegenüberliegende Seitenflanken aufweist, die eine ebenfalls wärmeleitende Doppelwand aufweisen, und die vertikale, flache Behälter (4a, 4b) bilden, welche mit dem die Bodenplatte (3) bildenden Behälter in Verbindung stehen.

7. Einheit gemäß Anspruch 6, **dadurch gekennzeichnet, dass** die vertikalen Behälter (4a, 4b) mit Anschlussansätzen (40, 41) versehen sind, die ermöglichen, die Einheit (1) jeweils an Zufuhr- und Ablaufleitungen für das Wärmeübertragungsfluid (FC) anzuschließen.

8. Einheit gemäß einem der Ansprüche 1 bis 7, **dadurch gekennzeichnet, dass** die Auflageelemente (2) aus einem Paar vertikaler Flansche bestehen, die an den beiden gegenüberliegenden Kanten der Bodenplatte (3) befestigt sind, und die die Enden des diese letztere bildenden Behälters sowie gegebenenfalls die Enden der vertikalen Behälter (4a, 4b) verschließen.

9. Einheit gemäß einem der Ansprüche 1 bis 8, **dadurch gekennzeichnet, dass** sie aus einem dichten Behälter besteht, der in der Lage ist, eine Flüssigkeit (E) aufzunehmen, in welcher die zu behandelnden Produkte (6) bespült werden können.

10. Einheit gemäß Anspruch 9, **dadurch gekennzeichnet, dass** sie ein Ausleersystem aufweist, wie ein Rohr (8), das die Bodenplatte (3) durchquert und das Ableiten aus dem Überlaufrohr für die Flüssigkeit (E) gewährleistet, wenn diese eine vorbestimmte Höhe (N) erreicht.

11. Anlage zur Wärmebehandlung von Nahrungsmitteln und insbesondere Fleischwaren, **dadurch gekennzeichnet, dass** sie mehrere Einheiten (1) gemäß einem der vorherigen Ansprüche umfasst, welche aufeinander aufgestapelt sind, und dass sie mit Zufuhr- (70) und Ablaufleitungen (71) für das Wärmeübertragungsfluid ausgestattet ist, an welche jede der Einheiten des Stapels angeschlossen ist.

12. Anlage gemäß Anspruch 11, **dadurch gekennzeichnet, dass** sie aus Einheiten gemäß Anspruch 9 oder 10 besteht, und dass sie ein Entleerungssystem mit Ventilklappen (9) aufweist, das in der Lage ist, das Entleeren der Gesamtheit der Behälter sicherzustellen.

13. Anlage gemäß Anspruch 11 oder 12, **dadurch gekennzeichnet, dass** das Wärmeübertragungsfluid (FC) aus einer heißen Flüssigkeit besteht, die ermöglicht, die Nahrungsmittel zu kochen.

14. Anlage gemäß Anspruch 11 oder 12, **dadurch gekennzeichnet, dass** das Wärmeübertragungsfluid (FC) aus einer kalten Flüssigkeit besteht, die ermöglicht, die Nahrungsmittel abzukühlen oder einzufrieren.
